# EUROPÄISCHE PATENTSCHRIFT

(11) **EP 1 882 291 B1**
(45) Veröffentlichungstag und Bekanntmachung des Hinweises auf die Patenterteilung: **24.06.2009**
(21) Anmeldenummer: 06708401.2
(22) Anmeldetag: 21.02.2006
(51) Int. Cl.: H02J 5/00

(54) **ENERGIEÜBERTRAGUNGSVORRICHTUNG**
ENERGY TRANSMISSION DEVICE
DISPOSITIF DE TRANSFERT D'ENERGIE

(30) Priorität: 13.05.2005 DE 102005022352
(43) Veröffentlichungstag der Anmeldung: 30.01.2008
(73) Patentinhaber: BSH Bosch und Siemens Hausgeräte GmbH, 81739 München (DE)
(72) Erfinder: DRECHSLER, Eberhard, 91277 Dresden (DE); KOMMA, Thomas, 85521 Ottobrunn (DE)
(86) Internationale Anmeldenummer: PCT/EP2006/060120
(87) Internationale Veröffentlichungsnummer: WO 2006/120044

(56) Entgegenhaltungen:
- US-A1- 2004 218 406
- US-A1- 2005 068 019

## Beschreibung

Die Erfindung geht aus von einer Energieübertragungsvorrichtung nach dem Oberbegriff des Anspruchs 1.

Es ist eine Energieübertragungsvorrichtung mit einer Primärspule zum induktiven Übertragen von elektromagnetischer Energie mit einer Energieübertragungsfrequenz auf eine lösbare Sekundärspule bekannt. Die bekannte Energieübertragungsvorrichtung umfasst zudem ein Sensiermittel zum Erfassen eines primärseitigen Arbeitsstroms, der eine Kenngröße für einen Lastwiderstand einer die Sekundärspule umfassenden Sekundärseite bildet. Das Dokument US 2004 218 406 offenbart eine gattungsgleiche Energieübertragungsvorrichtung mit einem Sensiermittel zum Erfassen wenigstens einer Kenngrösse einer die Sekundärspule umfassenden Sekundärseite.

Die Aufgabe der Erfindung besteht insbesondere darin, eine gattungsgemäße Energieübertragungsvorrichtung bereitzustellen, deren Sensiermittel besonders sicher Informationen über das Vorhandensein einer lösbaren Sekundärseite erfassen kann. Eine weitere Aufgabe der Erfindung besteht darin, eine Belastung eines Umfelds durch elektromagnetische Strahlung bei gelöster Sekundärseite zumindest zu reduzieren.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Energieübertragungsvorrichtung mit einer Primärspule zum induktiven Übertragen von elektromagnetischer Energie mit einer Energieübertragungsfrequenz auf eine lösbare Sekundärspule und mit einem Sensiermittel zum Erfassen wenigstens einer Kenngröße einer die Sekundärspule umfassenden, lösbaren Sekundärseite.

Es wird vorgeschlagen, dass das Sensiermittel eine Messspannung mit einer von der Energieübertragungsfrequenz verschiedenen Messfrequenz in die Sekundärspule einkoppelt. Dadurch kann erreicht werden, dass das Sensiermittel zumindest weitgehend unabhängig von einem Last- oder Scheinwiderstand der Sekundärseite ist. Dadurch ist die Energieübertragungsvorrichtung für eine besonders große Vielfalt von möglichen Sekundärseiten bzw. sekundärseitigen Geräten einsetzbar. Eine Streuung von elektromagnetischer Strahlung nach einem Entfernen der Sekundärseite kann vermieden werden, da ein solches Entfernen und eine ungeeignete Sekundärseite sicher erkannt werden können.

Gattungsgemäße Energieübertragungsvorrichtungen sind zur drahtlosen Energieübertragung in jeder, dem Fachmann als sinnvoll erscheinenden Anwendung gefragt. Wegen der Möglichkeit zur funkenlosen Kontaktierung sind Anwendungen der induktiven Energieübertragungsvorrichtung in besonders explosionsgefährdeten Bereichen denkbar. Wegen der fehlenden Steckkontakte sind Anwendungen in reinigungsintensiven oder verschmutzungsgefährdeten Bereichen, beispielsweise in Küchen, besonders vorteilhaft. In letzterem Fall kann beispielsweise die Primärspule in eine Küchenarbeitsplatte integriert sein und die Sekundärseite von verschiedenen beweglichen Küchengeräten gebildet sein. Weitere vorteilhafte Anwendungen sind Magnetbahnen und Ladestationen für Akkumulatoren, insbesondere für Akkumulatoren in elektrisch betriebenen Automobilen.

In einer Weiterbildung der Erfindung wird vorgeschlagen, dass.die Energieübertragungsvorrichtung zumindest einen Kondensator zum Ergänzen von wenigstens einer Spule zu einem elektromagnetischen Schwingkreis umfasst. Die Spule kann die Primärspule, die Sekundärspule oder eine weitere Spule sein. Durch den Schwingkreis kann eine Resonanzüberhöhung im Bereich einer Resonanzfrequenz erreicht werden, die besonders empfindlich auf das Vorhandensein bzw. Nichtvorhandensein der sekundärseitigen Baugruppe reagiert. Insbesondere dann, wenn das Sensiermittel die Resonanzüberhöhung erfasst, kann das Sensiermittel durch den Schwingkreis besonders empfindlich gestaltet werden. Dies gilt umso mehr, je näher die Resonanzfrequenz des Schwingkreises an der Messfrequenz liegt. Daher entspricht die Resonanzfrequenz des Schwingkreises besonders vorteilhaft zumindest im Wesentlichen der Messfrequenz, wobei Abweichungen von der Größenordnung einer Breite der Resonanz des Schwingkreises noch tolerierbar sind.

Eine besonders effektive Kopplung zwischen Primär- und Sekundärseite kann erreicht werden, wenn die Energieübertragungsvorrichtung sowohl einen primärseitigen Schwingkreis als auch einen sekundärseitigen Schwingkreis umfasst, wobei beide Schwingkreise zum Erreichen einer optimalen Kopplung eine im Wesentlichen gleiche und im Wesentlichen der Messfrequenz entsprechende Resonanzfrequenz haben können. Besonders vorteilhaft sind Ausgestaltungen der Erfindung, in denen der primärseitige Schwingkreis als Parallelschwingkreis ausgebildet ist und in denen der sekundärseitige Schwingkreis als Saugkreis ausgebildet ist.

Ein besonders störungsfreier Messvorgang kann erreicht werden, wenn die Messfrequenz induktiv in die Primärspule eingekoppelt ist. Prinzipiell ist jedoch auch eine kapazitive Einkopplung denkbar.

Umfasst die Energieübertragungsvorrichtung ein Schaltmittel zum Aktivieren und/oder Deaktivieren einer Energieübertragung abhängig von der sensierten Kenngröße, kann sichergestellt werden, dass die Energieübertragungsvorrichtung in solchen Situationen deaktiviert ist, in denen ansonsten eine Gefahr einer zu hohen Belastung des Umfelds durch elektromagnetische Felder bestünde. Das Schaltmittel kann die Energieübertragung besonders vorteilhaft immer dann deaktivieren, wenn das Sensiermittel keine geeignete Sekundärseite erkennt. Dadurch können insbesondere trotz hoher Energieübertragungsleistung gültige Emissionsgrenzwerte eingehalten und/oder sogar weit unterboten werden, da die Energieübertragung bei gelöster Sekundärseite eine energieübertragende Strahlung mit großer Amplitude selbsttätig abschaltet und nur eine Messstrahlung mit der Messfrequenz emittiert wird, die zu keiner nennenswerten Strahlungsbelastung führt.

Umfasst die Energieübertragungsvorrichtung zusätzlich zu dem Sensiermittel ein Mittel zum Erfassen eines primärseitigen Arbeitsstroms, kann eine weitere Kenngröße der Sekundärseite ermittelt werden und aus beiden Kenngrößen kann sicher auf eine Eignung der Sekundärseite zu einer Energieübertragung geschlossen werden. Es kann vermieden werden, dass eine Energie auf ungeeignete metallische Gegenstände übertragen wird, die beispielsweise durch die übertragene Energie überhitzen könnten.

Insbesondere wenn die Messfrequenz einer Resonanzfrequenz entspricht, ist eine besonders klare Aussage aus der vom Sensiermittel erfassten Messgröße ableitbar, wenn das Sensiermittel zum Erfassen eines Scheinwiderstands der Sekundärspule bei der Messfrequenz vorgesehen ist.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Energieübertragungsvorrichtung mit einer Primärspule und einer Sekundärseite mit einer Sekundärspule,
- Fig. 2: ein Prinzipschaltbild der Energieübertragungsvorrichtung bei angeschlossener Sekundärseite,
- Fig. 3: ein Prinzipschaltbild der Energieübertragungsvorrichtung aus den Figuren 1 und 2 bei gelöster Sekundärseite,
- Fig. 4: eine Frequenzabhängigkeit einer Kenngröße der Sekundärseite aus Figur 1 bei angeschlossener Sekundärseite und bei gelöster Sekundärseite und
- Fig. 5: die Frequenzabhängigkeit der Kenngröße aus Figur 4 bei gelöster Sekundärseite und bei angeschlossener Sekundärseite für verschiedene Werte einer Kapazität der Sekundärseite.

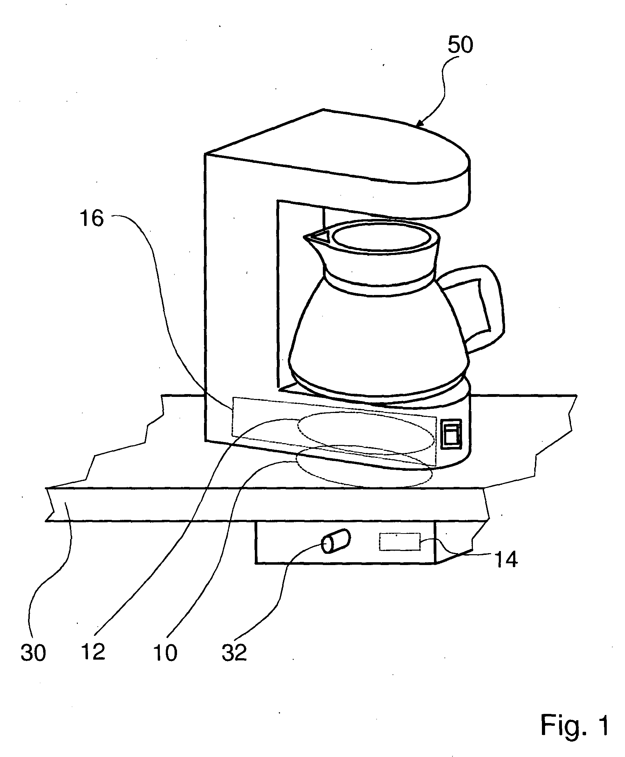

Figur 1 zeigt eine Energieübertragungsvorrichtung mit einer in eine Küchenarbeitsplatte 30 integrierten Primärspule 10 und mit einer in eine Kaffeemaschine 50 integrierten Sekundärspule 12. Die Energieübertragungsvorrichtung dient zum drahtlosen, induktiven Übertragen von elektromagnetischer Energie mit einer Energieübertragungsfrequenz ω_{E} von der Primärspule 10 auf die Sekundärspule 12. Über ein Stellmittel 32 kann ein Bediener die übertragene Leistung durch ein Verstellen der Energieübertragungsfrequenz ω_{E} verändern. Neben der Kaffeemaschine 50 ist eine Vielzahl von weiteren Küchengeräten mit entsprechenden Sekundärspulen ausgestattet. Eine in einem Sockel der Kaffeemaschine 50 integrierte Schaltung bildet eine Sekundärseite 16 der Energieübertragungsvorrichtung.

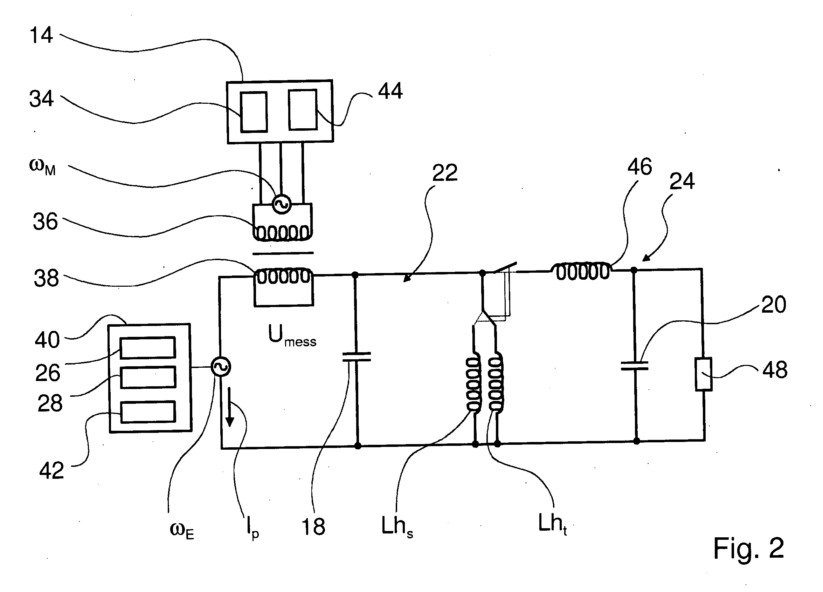

Eine in die Küchenarbeitsplatte 30 integrierte Primärseite der Energieübertragungsvorrichtung umfasst ein Sensiermittel 14 zum Erfassen eines Scheinwiderstands, der eine Kenngröße Z der Sekundärseite 16 bildet. Das Sensiermittel 14 umfasst einen Frequenzgenerator 34 zum Erzeugen einer Messspannung U_{Mess} mit einer Messfrequenz ω_{M} und eine Induktionsspule 36, die mit einer weiteren Induktionsspule 38 wechselwirkt, in die das Sensiermittel 14 die Messspannung U_{Mess} induktiv einkoppelt (Fig. 2). Die weitere Induktionsspule 38 ist unmittelbar mit der Primärspule 10 zu einem Stromkreis zusammengeschlossen. Der Stromkreis der Primärspule 10 umfasst eine Wechselspannungsquelle 40 mit einem Umrichter 42, die eine mit der Energieübertragungsfrequenz ω_{E} oszillierende Spannung erzeugt und in den Stromkreis einspeist. Parallel zur Primärspule 10 ist ein Kondensator 18 geschaltet, der die Primärspule 10 zu einem parallelen Schwingkreis 22 ergänzt, dessen freie Resonanzfrequenz ω_{R} im Wesentlichen der Messfrequenz ω_{M} entspricht. Die Sekundärseite 16 kann von einem Bediener auch während der Energieübertragung entfernt werden.

In der Wechselspannungsquelle 40 wird zunächst aus einem Haushaltsstromnetz über einen hier nicht explizit dargestellten Gleichrichter Gleichstrom erzeugt, der dann von dem Umrichter 42 in Wechselspannung mit der Energieübertragungsfrequenz ω_{E} transformiert wird. Auf der Sekundärseite 16 wird die übertragene Energie wieder über einen Gleichrichter gleichgerichtet und anschließend elektronisch in eine Nutzfrequenz transformiert. In alternativen Ausgestaltungen der Sekundärseite 16, insbesondere bei rein ohmscher sekundärseitiger Last, kann die Energieübertragungsfrequenz ω_{E} auch unmittelbar ohne zwischengeschaltete Transformation genutzt werden.

Die Messfrequenz ω_{M} ist um ein Vielfaches größer als die Energieübertragungsfrequenz ω_{E}. Im vorliegenden Beispiel beträgt die Messfrequenz ω_{M} 2,8 MHz, während die Energieübertragungsfrequenz ω_{E} im Bereich von einigen hundert kHz liegt.

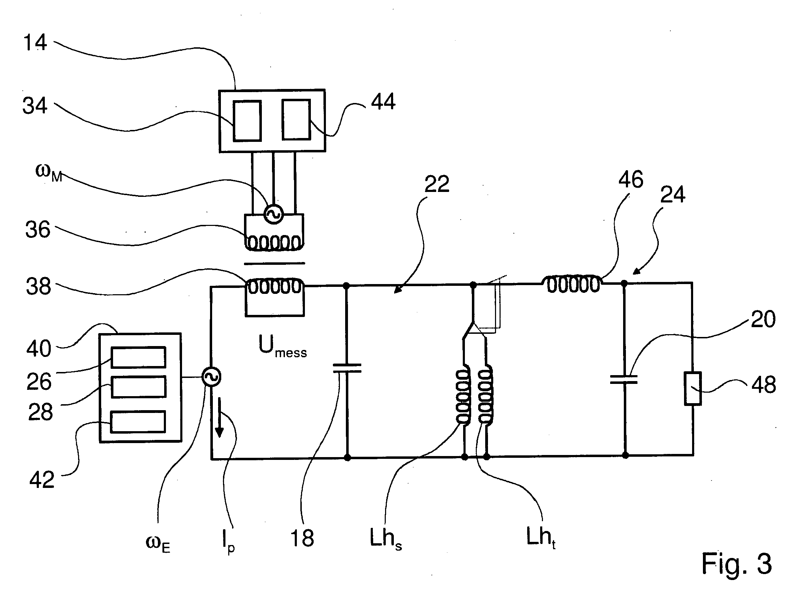

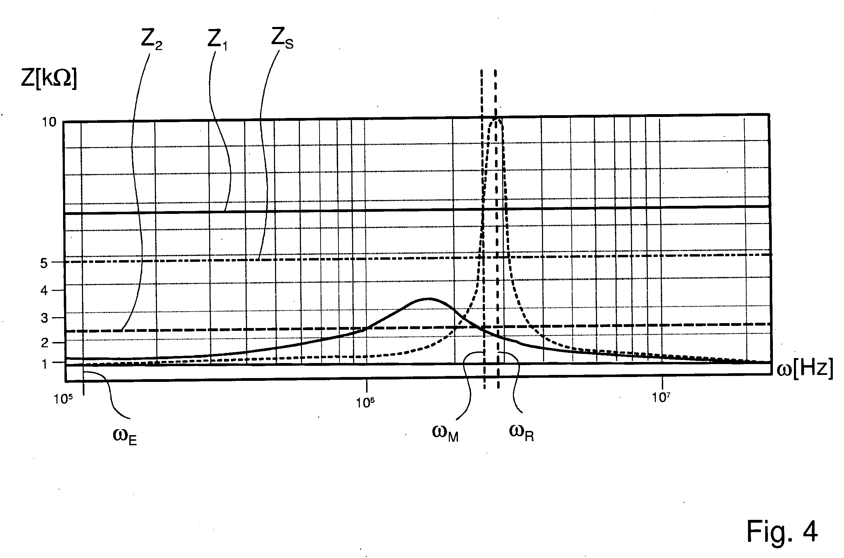

Über die Induktionsspulen 36, 38 koppelt das Sensiermittel 14 eine Messspannung U_{Mess} in den Schwingkreis 22 ein und regt diesen zum Schwingen an, sofern die Sekundärseite 16 entkoppelt ist. Über ein Widerstandsmessgerät 44 bestimmt das Sensiermittel 14 den Betrag des an der Induktionsspule 36 wirksamen Scheinwiderstands bei der Messfrequenz ω_{M}, der als Kenngröße Z für das Vorhandensein der Sekundärseite 16 genutzt wird (Figuren 3 und 4).

Die Sekundärseite 16 umfasst neben der Sekundärspule 12 zumindest formal eine Streuinduktivität 46, deren Magnetfeld nicht in die Primärspule 10 rückgekoppelt wird, sondern gestreut wird. Die Streuinduktivität 46 ist mit einem Kondensator 20 zu einer ReihenResonanz verschaltet, die einen als Saugkreis ausgebildeten zweiten Schwingkreis 24 bildet. Eine Last der Sekundärseite 16 kann im Prinzipschaltbild (Fig. 2) durch einen Lastwiderstand 48 ersetzt werden.

Sowohl die Primärspule 10 als auch die Sekundärspule 12 umfassen hier nicht explizit dargestellte Eisenkerne, so dass die Primärspule 10 und die Sekundärspule 12 jeweils eine Hälfte eines Transformators bilden. Das Verhältnis der Wicklungszahlen der Primärspule 10 und der Sekundärspule 12 ist auf die auf der Sekundärseite 16 benötigte Spannung abgestimmt.

Ist der aus der Primärspule 10 und der Sekundärspule 12 gebildete Transformator geschlossen, so koppelt das Sensiermittel 14 die Messspannung U_{Mess} über die induktive Wechselwirkung zwischen der Primärspule 10 und der Sekundärspule 12 in den als Saugkreis ausgebildeten zweiten Schwingkreis 24 ein, so dass die Resonanz des ersten Schwingkreises 22 gestört wird. Der erste Schwingkreis 22 wird über den zweiten Schwingkreis 24 kurzgeschlossen und eine effektive Hauptinduktivität der Primärspule 10 im Ersatzschaltbild steigt von einem Wert Lhₜ auf einen viel größeren Wert Lhₛ stark an (Figur 2).

Die Energieübertragungsvorrichtung umfasst zudem ein Mittel 28 zum Erfassen eines primärseitigen Arbeitsstroms Iₚ und ein Schaltmittel 26 zum Aktivieren und/oder Deaktivieren der Energieübertragung abhängig von der sensierten Kenngröße Z.

Figur 4 zeigt die Frequenzabhängigkeit der Kenngröße Z bei vorhandener Sekundärseite 16 als gestrichelte Linie und bei entfernter Sekundärseite 16 als durchgehende Linie. Entfernt ein Bediener die Sekundärseite 16, so steigt die Kenngröße Z durch eine durch den Schwingkreis 22 bedingte Resonanzüberhöhung schlagartig von einem Wert Z₂ auf einen Wert Z₁. Der Wert Z₁ der Kenngröße Z liegt über einem Schwellenwert Z_{S}, oberhalb dessen das Schaltmittel 26 die Wechselspannungsquelle 40 abschaltet, um Energieverluste und eine Strahlungsbelastung des Umfelds zu vermeiden. Fällt der Wert der Kenngröße Z dagegen unter den Schwellenwert Z_{S}, so erkennt die Energieübertragungsvorrichtung die Sekundärseite 16 und aktiviert über das Schaltmittel 26 die Wechselspannungsquelle 40. Anschließend wird der Wert des von dem Mittel 28 erfassten primärseitigen Arbeitsstroms Iₚ überprüft. Deutet ein zu großer Wert auf einen zu geringen Wert des Lastwiderstands 48 hin, so initiiert das Schaltmittel 26 eine Sicherheitsabschaltung.

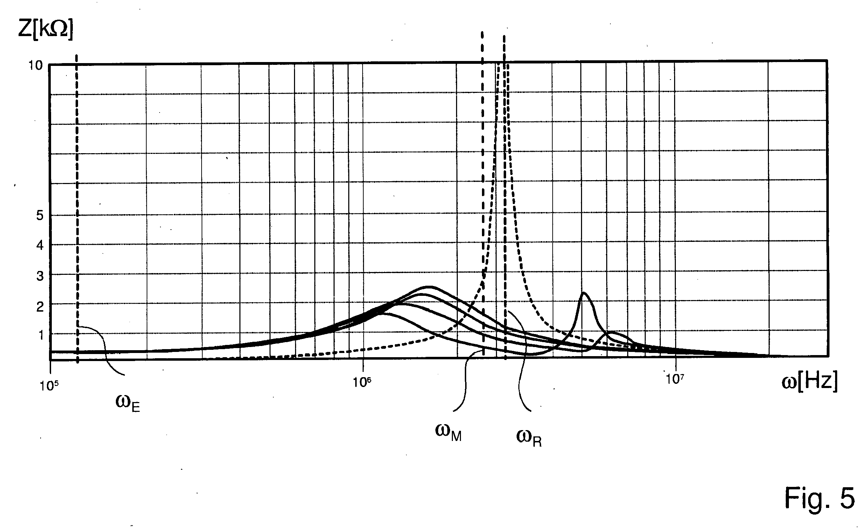

Figur 5 zeigt den frequenzabhängigen Verlauf der Kenngröße Z für mehrere Werte der Kapazität des sekundärseitigen Kondensators 20. Es sind Ausgestaltungen der Erfindung denkbar, in denen unterschiedliche sekundärseitige Geräte Kondensatoren 20 mit unterschiedlicher Kapazität aufweisen, wobei der Wert der Kapazität einen Gerätetyp codiert. Durch eine Messung der Kenngröße Z kann daher auf den Gerätetyp zurückgeschlossen werden.

### Bezugszeichen

- 10: Primärspule
- 12: Sekundärspule
- 14: Sensiermittel
- 16: Sekundärseite
- 18: Kondensator
- 20: Kondensator
- 22: Schwingkreis
- 24: Schwingkreis
- 26: Schaltmittel
- 28: Mittel
- 30: Küchenarbeitsplatte
- 32: Stellmittel
- 34: Frequenzgenerator
- 36: Induktionsspule
- 38: Induktionsspule
- 40: Wechselspannungsquelle
- 42: Umrichter
- 44: Widerstandsmessgerät
- 46: Streuinduktivität
- 48: Lastwiderstand
- 50: Kaffeemaschine
- U_{Mess}: Messspannung
- ω_{E}: Energieübertragungsfrequenz
- ω_{R}: Resonanzfrequenz
- ω_{M}: Messfrequenz
- Z: Kenngröße
- Iₚ: Arbeitsstrom
- Z₁: Wert
- Z₂: Wert
- Zₛ: Schwellenwert
- Lhₛ: Wert
- Lhₜ: Wert

## Patentansprüche

1. Energieübertragungsvorrichtung mit einer Primärspule (10) zum induktiven Übertragen von elektromagnetischer Energie mit einer Energieübertragungsfrequenz (ω_{E}) auf eine lösbare Sekundärspule (12) und mit einem Sensiermittel (14) zum Erfassen wenigstens einer frequenzabhängigen Kenngröße (Z) einer die Sekundärspule (12) umfassenden, lösbaren Sekundärseite (16), **dadurch gekennzeichnet, dass** das Sensiermittel (14) eine Messspannung (U_{Mess}), zum Erfassen der frequenzabhängigen Kenngröße (Z), mit einer von der Energieübertragungsfrequenz (ω_{E}) verschiedenen Messfrequenz (ω_{M}) in die Sekundärspule (12) einkoppelt.

2. Energieübertragungsvorrichtung nach Anspruch 1, **gekennzeichnet durch** zumindest einen Kondensator (18, 20) zum Ergänzen von wenigstens einer Spule (10, 12) zu einem elektromagnetischen Schwingkreis (22, 24).

3. Energieübertragungsvorrichtung nach Anspruch 2, **dadurch gekennzeichnet, dass** eine Resonanzfrequenz (ω_{R}) des Schwingkreises (22, 24) zumindest im Wesentlichen der Messfrequenz (ω_{M}) entspricht.

4. Energieübertragungsvorrichtung nach einem der vorhergehenden Ansprüche, **gekennzeichnet durch** einen primärseitigen Schwingkreis (22) und **durch** einen sekundärseitigen Schwingkreis (24).

5. Energieübertragungsvorrichtung nach einem der vorhergehenden Ansprüche, **dadurch gekennzeichnet, dass** die Messfrequenz (ω_{M}) induktiv in die Primärspule (10) eingekoppelt ist.

6. Energieübertragungsvorrichtung nach einem der vorhergehenden Ansprüche, **gekennzeichnet durch** ein Schaltmittel (26) zum Aktivieren und/oder Deaktivieren einer Energieübertragung abhängig von der sensierten Kenngröße (Z) und einem Schwellenwert (Z_{S}) der Kenngröße (Z).

7. Energieübertragungsvorrichtung nach einem der vorhergehenden Ansprüche, **gekennzeichnet durch** ein Mittel (28) zum Erfassen eines primärseitigen Arbeitsstroms (Iₚ).

8. Energieübertragungsvorrichtung nach einem der vorhergehenden Ansprüche, **dadurch gekennzeichnet, dass** das Sensiermittel (14) zum Erfassen einer durch einem Scheinwiderstand der Sekundärspule (12) bei der Messfrequenz (ω_{M}) gegebenen Kenngröße (Z) vorgesehen ist.

## Claims

1. Energy transmission device with a primary coil (10) for inductive transmission of electromagnetic energy at an energy transmission frequency (ω_{E}) to a detachable secondary coil (12) and with a sensing means (14) for detection of at least one frequency-dependent variable (Z) of a detachable secondary side (16) comprising the secondary coil (12), **characterised in that** the sensing means (14) couples into the secondary coil (12) a measuring voltage (U_{Mess}), for detection of the frequency-dependent variable (Z) together with a measuring frequency (ω_{M}) differing from the energy transmission frequency (ω_{E}).

2. Energy transmission device according to claim 1, **characterised by** at least one capacitor (18, 20) for supplementing at least one coil (10, 12) to form an electromagnetic oscillator circuit (22, 24).

3. Energy transmission device according to claim 2, **characterised in that** a resonance frequency (ω_{R}) of the oscillator circuit (22, 24) at least substantially corresponds with the measuring frequency (ω_{M}).

4. Energy transmission device according to any one of the preceding claims, **characterised by** an oscillator circuit (22) at the primary side and by an oscillator circuit (24) at the secondary side.

5. Energy transmission device according to any one of the preceding claims, **characterised in that** the measuring frequency (ω_{M}) is inductively coupled into the primary coil (10).

6. Energy transmission device according to any one of the preceding claims, **characterised by** a switching means (26) for activation and/or deactivation of an energy transmission in dependence on the sensed variable (Z) and a threshold value (Z_{S}) of the variable (Z).

7. Energy transmission device according to any one of the preceding claims, **characterised by** a means (28) for detection of a working current (Iₚ) at the primary side.

8. Energy transmission device according to any one of the preceding claims, **characterised in that** the sensing means (14) is provided for detection of a variable (Z) given by an impedance of the secondary coil (12) at the measuring frequency (ω_{M}).

## Revendications

1. Dispositif de transfert d'énergie comprenant une bobine primaire (10) pour le transfert inductif d'énergie électromagnétique avec une fréquence de transmission d'énergie (ω_{E}) à une bobine secondaire (12) amovible et un moyen de détection (14) pour la saisie d'au moins une grandeur caractéristique (Z) dépendant de la fréquence, d'un côté secondaire (16), amovible et comprenant la bobine secondaire (12), **caractérisé en ce que** le moyen de détection (14) injecte une tension de mesure (U_{MESS}), pour la saisie de la grandeur caractéristique (Z) dépendante de la fréquence, avec une fréquence de mesure (ω_{M}) différente de la fréquence de transfert d'énergie (ω_{E}), dans la bobine secondaire (12).

2. Dispositif de transfert d'énergie selon la revendication 1, **caractérisé par** au moins un condensateur (18, 20) pour ajouter au moins une bobine (10, 12) à un circuit oscillant (22, 24) électromagnétique.

3. Dispositif de transfert d'énergie selon la revendication 2, **caractérisé en ce qu'**une fréquence de résonance (ω_{R}) du circuit oscillant (22, 24) correspond au moins sensiblement à la fréquence de mesure (ω_{M}).

4. Dispositif de transfert d'énergie selon l'une quelconque des revendications précédentes, **caractérisé par** un circuit oscillant (22) côté primaire et par un circuit oscillant (24) côté secondaire.

5. Dispositif de transfert d'énergie selon l'une quelconque des revendications précédentes, **caractérisé en ce que** la fréquence de mesure (ω_{M}) est injectée par induction dans la bobine primaire (10).

6. Dispositif de transfert d'énergie selon l'une quelconque des revendications précédentes, **caractérisé par** un moyen de commutation (26) pour l'activation et/ou la désactivation d'un transfert d'énergie en fonction de la grandeur caractéristique (Z) détectée et d'une valeur seuil (Zₛ) de la grandeur caractéristique (Z).

7. Dispositif de transfert d'énergie selon l'une quelconque des revendications précédentes, **caractérisé par** un moyen (28) pour la détection d'un courant de travail (Iₚ) côté primaire.

8. Dispositif de transfert d'énergie selon l'une quelconque des revendications précédentes, **caractérisé en ce que** le moyen de détection (14) est prévu pour la saisie d'une grandeur caractéristique (Z) donnée par une impédance de la bobine secondaire (12) à la fréquence de mesure (ω_{M}).
